# FASCICULE DE BREVET EUROPEEN

(11) **EP 3 867 024 B1**
(45) Date de publication et mention de la délivrance du brevet: **11.10.2023**
(21) Numéro de dépôt: 19786579.3
(22) Date de dépôt: 15.10.2019
(51) Int. Cl.: F04B 37/10, F04B 37/14, B25J 15/06, B65G 47/91

(54) **DISPOSITIF DE COMMANDE D'UN COMPOSANT PNEUMATIQUE**
STEUERUNGSVORRICHTUNG EINER PNEUMATISCHEN KOMPONENTE
CONTROL DEVICE OF A PNEUMATIC COMPONENT

(30) Priorité: 19.10.2018 FR 1859701
(43) Date de publication de la demande: 25.08.2021
(73) Titulaire: COVAL, 26120 Montelier (FR)
(72) Inventeur: BUFFAT, Emmanuel, 07300 MAUVES (FR); CECCHIN, Michel, 26120 MONTELIER (FR); MILHAU, Pierre, 26300 CHATUZANGE LE GOUBET (FR)
(74) Mandataire: Lavialle, Bruno François Stéphane
(86) Numéro de dépôt international: PCT/EP2019/077981
(87) Numéro de publication internationale: WO 2020/079004

(56) Documents cités:
- EP-A1- 1 719 720
- WO-A1-2005/087631
- DE-A1-102016 204 122
- US-A- 4 750 768

## Description

La présente invention concerne le domaine de la commande fluidique, notamment pour la manutention par le vide.

L'invention concerne plus particulièrement un dispositif de commande d'un composant pneumatique comme un éjecteur ou une pompe à vide Venturi. L'invention concerne également un dispositif de génération de vide comprenant un éjecteur relié à un tel dispositif de commande.

### ARRIERE PLAN DE L'INVENTION

Les éjecteurs sont couramment utilisés pour fournir le vide nécessaire à des opérations de manipulation par aspiration et plus particulièrement aux déplacements d'objets difficiles à saisir ou fragiles.

Un éjecteur comprend schématiquement un conduit comportant une buse de type Venturi ayant :
- un orifice d'entrée destiné à être raccordé à un circuit d'alimentation en air comprimé,
- un orifice de sortie d'un jet d'air accéléré par la buse, et
- un orifice d'aspiration, agencé entre l'orifice d'entrée et l'orifice de sortie, par lequel une aspiration est créée par le jet d'air circulant entre l'orifice d'entrée et l'orifice de sortie.

L'orifice d'aspiration est relié à au moins une ventouse agencée pour être appliquée sur l'objet à saisir. Le circuit d'alimentation est généralement reliée à la source de pression par une vanne qui peut être commandée entre un état d'alimentation permettant la mise sous pression du circuit d'alimentation de l'éjecteur, et donc la saisie d'un objet, et un état d'échappement permettant de mettre le circuit d'alimentation à l'échappement et donc de lâcher l'objet. L'alimentation de l'éjecteur est maintenue pendant toute la durée de saisie de l'objet : la consommation en air comprimé qui en découle est généralement considérée comme excessive.

On connaît des circuits d'alimentation pourvus d'un moyen de régulation pour réguler automatiquement le vide généré par l'éjecteur et ainsi faire des économies en air comprimé. Le principe consiste à couper l'alimentation de l'éjecteur lorsque le vide a atteint un seuil prédéterminé sans mettre le circuit d'alimentation à l'échappement pour empêcher la perte du vide. Si en raison d'une fuite, le vide passe sous le seuil prédéterminé, l'alimentation de l'éjecteur est rétablie. Le lâcher de l'objet est obtenu comme précédemment en mettant l'éjecteur à l'échappement.

Le moyen de régulation comprend habituellement un circuit électronique pilotant une vanne entre un état ouvert pour alimenter l'éjecteur en air comprimé et un état fermé pour interrompre l'alimentation de l'éjecteur sans pour autant le mettre à l'échappement. Pour des raisons de coût et de simplicité de pilotage, on utilise généralement une vanne monostable normalement fermée de sorte qu'en l'absence de courant au niveau du port de commande de la vanne, la vanne est dans son état fermé. Cependant, en cas défaillance de l'alimentation électrique et de fuite en aval de la vanne, la pression dans la ventouse va augmenter, ce qui peut provoquer la chute de l'objet soulevé par aspiration.

Une solution connue consiste à utiliser un condensateur ou une batterie qui, lors de la coupure électrique, va permettre de ramener la vanne dans son état ouvert. Néanmoins, cette solution demande une source d'énergie supplémentaire qui augmente le coût d'achat et le coût d'utilisation du circuit d'alimentation.

Le document EP 1 719 720 A1 divulgue un dispositif de commande d'une ventouse reliée à un éjecteur et fixée à l'extrémité d'un vérin.

### OBJET DE L'INVENTION

Un but de l'invention est donc de proposer un dispositif de commande d'un éjecteur permettant, même en cas de chute de tension, de maintenir une pression négative et d'obvier au moins en partie aux inconvénients précités.

### RESUME DE L'INVENTION

En vue de la réalisation de ce but, on propose, selon l'invention, un dispositif de commande d'un composant pneumatique comprenant un circuit d'alimentation en air comprimé destiné à être relié à une entrée du composant pneumatique. Le circuit comprend une vanne monostable normalement fermée ayant une entrée destinée à être reliée à une source d'air comprimé et une sortie destinée à être reliée au composant pneumatique, et un distributeur bistable ayant un premier port destiné à être relié à la source d'air comprimé et un deuxième port relié à un premier port d'un distributeur monostable normalement passant, le distributeur monostable ayant un deuxième port relié à un port pneumatique de commande de la vanne monostable.

Le distributeur bistable peut adopter un état passant dans lequel une connexion est créée entre le premier port et le deuxième port dudit distributeur, et un état non passant dans lequel le premier port et le deuxième port sont déconnectés l'un de l'autre. Le distributeur monostable peut adopter un état de repos dans lequel une connexion est créée entre le premier port et le deuxième port dudit distributeur et un état d'échappement dans lequel le deuxième port dudit distributeur est relié à une sortie d'échappement.

De manière particulière, le dispositif de commande comprend un circuit électronique de pilotage des distributeurs.

Avantageusement alors, le circuit électronique de pilotage comprend une première unité de commande agencée pour contrôler l'état du distributeur bistable, et une deuxième unité de commande agencée pour amener le distributeur monostable dans l'état d'échappement.

L'invention concerne également un dispositif de génération de vide comprenant un éjecteur et un tel dispositif de commande, la sortie de la vanne monostable étant reliée à un orifice d'entrée de l'éjecteur.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
La figure 1 est une vue schématique d'un dispositif de génération de vide selon un mode de réalisation particulier de l'invention, le dispositif étant à l'arrêt ;
La figure 2 est une vue analogue à la figure 1, le dispositif étant en phase active d'aspiration ;
La figure 3 est une vue analogue à la figure 1, le dispositif étant en phase passive de maintien de l'aspiration.

### DESCRIPTION DETAILLEE DE L'INVENTION

En référence aux figures, l'invention est ici décrite en application à l'alimentation d'un éjecteur E pour la manutention d'objet O.

L'éjecteur E comprend schématiquement un conduit comportant une buse de type Venturi ayant :
- un orifice d'entrée destiné à être raccordé à un circuit d'alimentation en air comprimé,
- un orifice de sortie relié à un silencieux S,
- un orifice d'aspiration, agencé entre l'orifice d'entrée et l'orifice de sortie, par lequel une aspiration est créée par le jet d'air circulant entre l'orifice d'entrée et l'orifice de sortie.

L'orifice d'aspiration est relié à un clapet anti-retour C taré, lui-même relié à une ventouse Ve. La ventouse Ve comprend un soufflet comportant une portion d'extrémité libre sensiblement déformable pour épouser une surface d'un objet O. Un filtre F2 est disposé entre la ventouse Ve et le clapet anti-retour C afin d'éviter tout disfonctionnement de l'éjecteur E. L'éjecteur E a une structure connue en elle-même qui ne sera pas décrite plus en détail ici.

Le dispositif de génération de vide selon l'invention, généralement désigné en 1, comprend un circuit d'alimentation 2 en air comprimé ayant une entrée reliée à une source d'air comprimé P et une sortie reliée à un orifice d'entrée d'un éjecteur E. Un filtre F1 est disposé entre la source d'air comprimé et l'entrée du circuit d'alimentation 2 afin d'éviter toute pollution dudit circuit d'alimentation 2.

Le circuit d'alimentation 2 comprend une vanne monostable V normalement fermée ayant une entrée reliée à la source d'air comprimé P via le filtre F1 et une sortie reliée à l'orifice d'entrée de l'éjecteur E.

Le circuit d'alimentation 2 comprend également un distributeur bistable D1 ayant un premier port relié à la source d'air comprimé P via le filtre F1 et un deuxième port relié à un premier port d'un distributeur monostable D2 normalement passant. Un deuxième port du distributeur monostable D2 est relié à un port ou entrée de commande de la vanne monostable V.

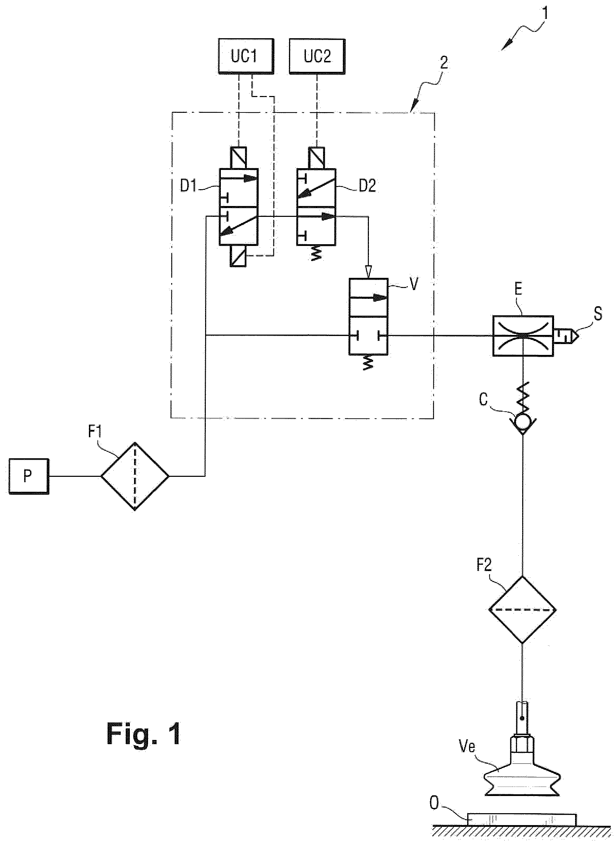

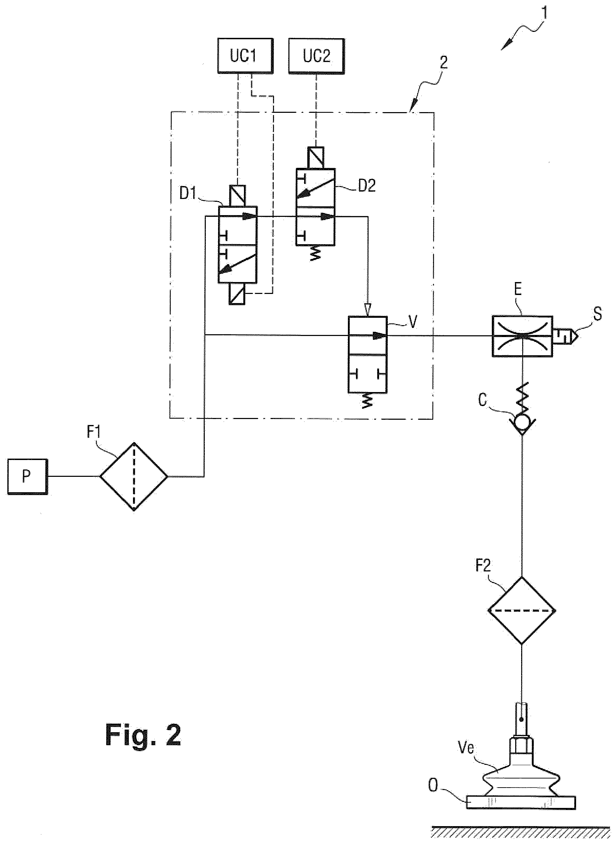

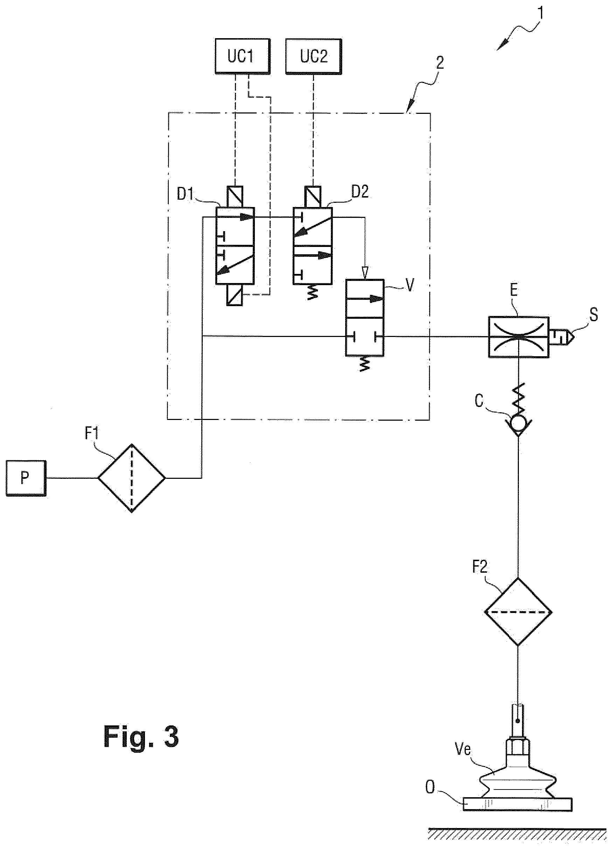

Le distributeur bistable D1 comprend de façon connue en elle-même un tiroir pouvant adopter deux états : un état passant (illustré aux figures 2 et 3) dans lequel le tiroir assure une connexion entre le premier port et le deuxième port dudit distributeur et un état d'échappement (illustré sur la figure 1) dans lequel le tiroir empêche le passage d'air entre le premier port et le deuxième port et raccorde le deuxième port à l'air libre.

L'état du distributeur bistable D1 est commandé par deux électro-aimants disposés à des extrémités opposées dudit distributeur pour déplacer le tiroir, de sorte qu'une impulsion électrique d'au moins 50 millisecondes (ms) générée par une première unité de commande UC1 permet de modifier l'état du distributeur bistable D1. On notera qu'une durée d'impulsion supérieure à 50 ms n'a ici aucune influence sur le fonctionnement du distributeur bistable D1.

Le distributeur monostable D2 comprend de façon connue en elle-même un tiroir pouvant adopter deux états : un état de repos (illustré sur les figures 1 et 2) dans lequel le tiroir établit une connexion entre le premier port et le deuxième port dudit distributeur et un état d'échappement (illustré à la figure 3) dans lequel le tiroir inhibe le passage d'air entre le premier port et le deuxième port et relie le deuxième port à l'air libre.

L'état du distributeur monostable D2 est commandé par un électro-aimant disposé à une extrémité dudit distributeur, de sorte qu'une tension électrique générée par une deuxième unité de commande UC2 déplace le tiroir pour permettre au distributeur monostable D2 de passer de l'état de repos à l'état d'échappement.

Les première et deuxième unités de commande UC1 et UC2 forment avec le circuit d'alimentation 2 un dispositif de commande de l'éjecteur E. L'unité de commande UC2 est reliée à au moins un capteur de pression non représenté disposé à proximité de la ventouse pour surveiller la pression dans la ventouse.

Le fonctionnement du dispositif de commande de l'éjecteur E va maintenant être détaillé.

La première unité de commande UC1 permet de piloter la génération du vide par l'éjecteur E en commandant l'état du distributeur bistable D1.

Ainsi, lorsqu'un utilisateur du dispositif de génération de vide 1 souhaite soulevé un objet O via la ventouse Ve, l'unité de commande D1 génère une impulsion électrique d'au moins 50 ms de façon à faire passer le distributeur bistable D1 de l'état d'échappement à l'état passant. L'air comprimé traverse alors le distributeur bistable D1 puis le distributeur D2 à l'état de repos, ce qui a pour effet de faire passer la vanne monostable V de l'état fermé à l'état ouvert et donc d'alimenter en air comprimé l'éjecteur E. L'objet O se retrouve alors aspiré par la ventouse Ve dont la portion d'extrémité libre épouse la surface de l'objet O aspiré.

La deuxième unité de commande UC2 permet ensuite de piloter la régulation du vide généré par l'éjecteur E en commandant l'état du distributeur monostable D2.

Ainsi, lorsque le vide mesuré par le capteur de pression agencé à proximité de la ventouse Ve a atteint un seuil prédéterminé, l'unité de commande UC2 génère une tension électrique de façon à faire passer le distributeur monostable D2 de l'état de repos à l'état d'échappement, ce qui a pour effet de faire passer la vanne monostable V de l'état ouvert à l'état fermé. L'éjecteur E n'est alors plus alimenté en air comprimé. Le clapet anti-retour C empêche cependant la perte du vide au niveau de la ventouse Ve, de sorte que l'objet O reste plaqué à la portion d'extrémité libre de la ventouse Ve. L'unité de commande UC2 permet ainsi de faire des économies d'air comprimé.

Si en raison d'une fuite, le vide mesuré par le capteur passe sous le seuil prédéterminé, la deuxième unité de commande UC2 stoppe la génération de la tension électrique de façon à faire passer le distributeur monostable D2 de l'état d'échappement à l'état de repos, ce qui a pour effet de faire passer la vanne monostable V de l'état fermé à l'état ouvert et donc de réactiver l'aspiration. Le risque de provoquer la chute de l'objet O est donc limité en cas de fuite.

De même, lorsque la tension générée par la deuxième unité de commande UC2 est insuffisante voire inexistante, le distributeur monostable D2 passe de l'état d'échappement à l'état de repos, ce qui a comme précédemment pour effet de réactiver l'aspiration et donc d'éviter la chute de l'objet O.

Ainsi, même en cas de panne d'alimentation de la deuxième unité de commande UC2 ou de disfonctionnement du distributeur monostable D2, le dispositif de commande 1 pourra néanmoins fonctionner en mode dégradé, soit sans régulation du vide, grâce à la première unité de commande UC1 et au distributeur bistable D1 qui permettent d'alimenter en permanence l'éjecteur E en air comprimé.

Bien entendu, l'invention n'est pas limitée au mode de réalisation décrit mais englobe toute variante entrant dans le champ de l'invention telle que définie par les revendications.

Les positions du distributeur bistable D1 et du distributeur monostable D2 dans le circuit d'alimentation en air comprimé peuvent être inversées.

Le circuit électronique de pilotage peut comprendre, comme dans l'exemple décrit, deux unités de commande De 1 et UC2 séparées mais aussi une seule et unique unité de commande.

Le circuit d'alimentation peut comprendre d'autres composants que ceux décrits et peut être relié directement ou indirectement à la source de pression.

La présence du filtre F1 entre la source d'air comprimé et l'entrée du circuit d'alimentation 2 est optionnelle.

La présence du filtre F2 entre la ventouse Ve et le clapet anti-retour C est optionnelle.

La vanne monostable V peut être une vanne d'amplification du débit d'air.

Par distributeur, on entend tout dispositif de distribution de fluide ayant deux états (un état passant d'alimentation et un état bloquant ou un état d'échappement) et des moyens commandés de passage au moins de l'un des états vers l'autre. Des distributeurs à commande indirecte, autrement dit des distributeurs commandés par des électrodistributeurs peuvent remplacer les distributeurs D1 et D2 à commande directe.

L'éjecteur E peut être de tout type (mono-étagé, multi-étagé, lubrifié, sans huile, ...) .

## Revendications

1. Dispositif de commande (1) d'un composant pneumatique (E) comprenant un circuit d'alimentation (2) en air comprimé destiné à être relié à une entrée du composant pneumatique, le circuit comprenant une vanne monostable (V) normalement fermée ayant une entrée destinée à être reliée à une source d'air comprimé (P) et une sortie destinée à être reliée à l'entrée du composant pneumatique, et un distributeur bistable (D1) ayant un premier port destiné à être relié à la source d'air comprimé et un deuxième port relié à un premier port d'un distributeur monostable (D2) normalement passant, le distributeur monostable (D2) ayant un deuxième port relié à un port pneumatique de commande de la vanne monostable,
le distributeur bistable (D1) pouvant adopter un état passant dans lequel une connexion est créée entre le premier port et le deuxième port dudit distributeur, et un état non passant dans lequel le premier port et le deuxième port sont déconnectés l'un de l'autre, et
le distributeur monostable (D2) pouvant adopter un état de repos dans lequel une connexion est créée entre le premier port et le deuxième port dudit distributeur et un état d'échappement dans lequel le deuxième port dudit distributeur est relié à une sortie d'échappement.

2. Dispositif de commande selon la revendication 1, comprenant un circuit électronique de pilotage des distributeurs.

3. Dispositif selon la revendication 2, dans lequel le circuit électronique de pilotage comprend une première unité de commande (UC1) agencée pour contrôler l'état du distributeur bistable (D1), et une deuxième unité de commande (UC2) agencée pour amener le distributeur monostable (D2) dans l'état d'échappement.

4. Dispositif de génération de vide comprenant un éjecteur (E) et un dispositif de commande selon l'une quelconque des revendications 1 à 3, la sortie de la vanne monostable (V) étant reliée à un orifice d'entrée de l'éjecteur.

## Patentansprüche

1. Steuervorrichtung (1) zum Steuern einer pneumatischen Komponente (E), die einen Druckluftversorgungskreis (2) umfasst, der dazu bestimmt ist, mit einem Einlass der pneumatischen Komponente verbunden zu werden, wobei der Kreis ein normalerweise geschlossenes monostabiles Ventil (V) umfasst, das einen Einlass hat, der dazu bestimmt ist, mit einer Druckluftquelle (P) verbunden zu werden, und einen Auslass, der dazu bestimmt ist, mit dem Einlass der pneumatischen Komponente verbunden zu werden, und einen bistabilen Verteiler (D1), der eine erste Öffnung hat, die dazu bestimmt ist, mit der Druckluftquelle verbunden zu werden, und eine zweite Öffnung, die mit einer ersten Öffnung eines normalerweise durchlässigen monostabilen Verteilers (D2) verbunden ist, wobei der monostabile Verteiler (D2) eine zweite Öffnung hat, die mit einer pneumatischen Steueröffnung des monostabilen Ventils verbunden ist,
wobei der bistabile Verteiler (D1) einen Durchlasszustand, in dem eine Verbindung zwischen der ersten Öffnung und der zweiten Öffnung des genannten Verteilers erzeugt wird, und einen Nicht-Durchlasszustand annehmen kann, in dem die erste Öffnung und die zweite Öffnung voneinander getrennt sind, und
wobei der monostabile Verteiler (D2) einen Ruhezustand, in dem eine Verbindung zwischen der ersten Öffnung und der zweiten Öffnung des Verteilers erzeugt wird, und einen Ausströmzustand annehmen kann, in dem die zweite Öffnung des genannten Verteilers mit einem Ausströmauslass verbunden ist.

2. Steuervorrichtung nach Anspruch 1, umfassend eine elektronische Steuerschaltung zur Ansteuerung der Verteiler.

3. Vorrichtung nach Anspruch 2, bei der die elektronische Steuerschaltung eine erste Steuereinheit (UC1) umfasst, die ausgebildet ist, den Zustand des bistabilen Verteilers (D1) zu steuern, sowie eine zweite Steuereinheit (UC2), die ausgebildet ist, den monostabilen Verteiler (D2) in den Ausströmzustand zu bringen.

4. Vakuumerzeugungsvorrichtung, umfassend einen Ejektor (E) und eine Steuervorrichtung nach einem der Ansprüche 1 bis 3, wobei der Auslass des monostabilen Ventils (V) mit einer Einlassöffnung des Ejektors verbunden ist.

## Claims

1. A control device (1) for controlling a pneumatic component (E), the device comprising a compressed air supply circuit (2) for connecting to an inlet of the pneumatic component, the circuit comprising both a normally closed monostable valve (V) having an inlet for connecting to a compressed air source (P) and an outlet for connecting to the inlet of the pneumatic component, and also a bistable directional valve (D1) having both a first port for connecting to the compressed air source and also a second port connected to a first port of a normally passing monostable directional valve (D2), the monostable directional valve (D2) having a second port connected to a pneumatic control port of the monostable valve;
· the bistable directional valve (D1) being capable of adopting a passing state in which a connection is created between the first port and the second port of said directional valve, and a non-passing state in which the first port and the second port are disconnected from each other; and
· the monostable directional valve (D2) being capable of adopting a rest state in which a connection is created between the first port and the second port of said directional valve, and an exhaust state in which the second port of said directional valve is connected to an exhaust outlet.

2. A control device according to claim 1, including an electronic control circuit for switching the directional valves.

3. A device according to claim 2, wherein the electronic control circuit comprises both a first control unit (UC1) arranged to control the state of the bistable directional valve (D1), and also a second control unit (UC2) arranged to put the monostable directional valve (D2) in the exhaust state.

4. A vacuum generator device comprising an ejector (E) and a control device according to any one of claims 1 to 3, the outlet of the monostable valve (V) being connected to an inlet orifice of the ejector.
